# EUROPÄISCHE PATENTSCHRIFT

(11) **EP 1 153 090 B1**
(45) Veröffentlichungstag und Bekanntmachung des Hinweises auf die Patenterteilung: **25.09.2002**
(21) Anmeldenummer: 00989975.8
(22) Anmeldetag: 13.12.2000
(51) Int. Cl.: C09D 4/06, C09D 183/08, C09D 183/10

(54) **VERFAHREN ZUR HERSTELLUNG VON STRAHLENHÄRTBAREN BESCHICHTUNGSFORMULIERUNGEN UND VERWENDUNG DIESER ZUR ERZEUGUNG VON KRATZ-, ABRIEB- UND HAFTFESTEN BESCHICHTUNGEN**
METHOD FOR PRODUCING RADIATION-HARDENABLE COATING FORMULATIONS AND USE THEREOF FOR THE PRODUCTION OF SCRATCH-RESISTANT, ABRASIONPROOF AND ADHESIVE COATINGS
PROCEDE DE REALISATION DE FORMULATIONS DE REVETEMENT RADIODURCISSABLES ET LEUR UTILISATION POUR LA PRODUCTION DE REVETEMENTS RESISTANT AUX RAYURES ET A L'ABRASION ET PRESENTANT UNE BONNE ADHERENCE

(30) Priorität: 14.12.1999 DE 19961632
(43) Veröffentlichungstag der Anmeldung: 14.11.2001
(73) Patentinhaber: Institut für Oberflächenmodifizierung e.V., 04303 Leipzig (DE)
(72) Erfinder: RUMMEL, Siegbert, 04157 Leipzig (DE); GLÄSEL, Hans-Jürgen, 04229 Leipzig (DE); LANGGUTH, Helmut, 04103 Leipzig (DE); MEHNERT, Reiner, 04416 Markkleeberg (DE)
(74) Vertreter: Ziebig, Marlene, Dr. Dipl.-Chem.
(86) Internationale Anmeldenummer: EP0012669
(87) Internationale Veröffentlichungsnummer: WO01044381

(56) Entgegenhaltungen:
- EP-A- 0 424 645
- EP-A- 0 666 290
- WO-A-98/31720
- US-A- 5 260 350
- US-A- 5 374 483
- US-A- 5 403 535
- US-A- 5 840 428

## Beschreibung

Die vorliegende Erfindung betrifft ein einfach durchführbares und kostengünstiges Verfahren zur Herstellung von strahlenhärtbaren Beschichtungsformulierungen, das dadurch gekennzeichnet ist, daß unter den Bedingungen der Michael-Addition mindestens ein multifunktionelles Acrylatmonomer oder - oligomer (Komponente I) mit einem Aminoalkoxysilan (Komponente II), das zwei oder drei hydrolysierbare Reste und ein oder zwei nicht hydrolysierbare Reste aufweist, zur Reaktion gebracht werden, das erhaltene Michael-Addukt mit dem Anhydrid einer ungesättigten Dicarbonsäure (Komponente III) umgesetzt wird, die Alkoxygruppen des Reaktionsproduktes hydrolysiert werden und nanoskalige Oxide oder Mischungen nanoskaliger und mikroskaliger Oxide von Metallen oder Halbmetallen oder deren Mischoxiden (Komponente V) in Pulverform zugesetzt werden und nach Beendigung der Umsetzung gegebenenfalls ein Photoinitiator zugesetzt wird.

Gegenstand der Erfindung ist auch die Verwendung der mit dem genannten Verfahren hergestellten Beschichtungsformulierungen zur Erzeugung von kratz-, abrieb- und haftfesten Beschichtungen.

Die Erfindung betrifft strahlenhärtbare hybride anorganisch-organisch 100% Lacke auf der Basis von Michael-Addukten multifunktioneller Acrylate mit aminofunktionellen Alkoxiden und deren Umsetzungsprodukten mit einem Dicarbonsäureanhydrid zu einem Säureamidderivat, das in der Lage ist, hochdisperse anorganische Oxide durch eigenkatalysierte Hydrolysereaktionen mit Wasser und nachfolgende Kondensationsprozesse homogen einzubinden.

Mit dem Begriff "Strahlenhärtung" wird in der deutschen Literatur der Prozeß der schnellen Umwandlung speziell formulierter Beschichtungssysteme unter der Einwirkung von Ultraviolett (UV)- oder Elektronenstrahlung (EB) bezeichnet. Dominierend seit der kommerziellen Einführung strahlenhärtbarer Beschichtungsmaterialien in den sechziger Jahren sind Acrylat-Monomer-Prepolymer-Bindemittelsysteme sowie kationisch härtende Formulierungen aus Epoxiden, Polyolen und Vinylethern. Diese rein organischen Beschichtungsmaterialien haben jedoch als Schutzschichten auch bei hohen Netzwerkdichten Grenzen bezüglich ihrer Härte und Kratzfestigkeit und weisen zudem oft bei geeigneter Schichtdicke eine zu geringe Haftung auf dem Substrat aus. Um höhere Kratzfestigkeiten zu erreichen, muß man deshalb zu anorganisch - organischen Hybridsystemen (bzw. zu rein anorganischen Beschichtungen) übergehen.

Bekanntlich müssen zahlreiche Gegenstände, insbesondere Gegenstände aus Kunststoffen, mit kratzfesten Beschichtungen versehen werden, da ihre Kratzempfindlichkeit sonst ihren Einsatz beschränken würde. Obwohl in den letzten Jahren eine Reihe von geeigneten Beschichtungsmaterialien entwickelt wurden, ist immer noch Raum für Verbesserungen, insbesondere was die kostengünstige Herstellung stabiler Beschichtungsformulierungen angeht als auch was die Kratzbeständigkeit, die Abriebsfestigkeit und Haftung der Beschichtung auf dem Substrat betrifft.

Die Kombination von anorganischen und organischen Komponenten in einem Lack kann durch verschiedene mechanische und chemische Methoden oder eine Kombination beider Methoden erreicht werden und führt zu Kompositen oder Formulierungen mit chemischer Anbindung der organischen Matrix und der anorganischen Komponenten. Die Eigenschaften der Hybride können in Abhängigkeit von den konstitutionellen anorganischen und organischen Komponenten in weiten Grenzen eingestellt werden.

Strahlenhärtbare Lacke mit organomodifizierten Metalloxiden kann man durch Co-Hydrolyse- und Kondensationsprozesse von geeigneten Precursoren in situ nach dem sog. Sol-Gel-Prozess erhalten.

Ausgehend von Mehrkomponentensystemen, bestehend aus Siliciumalkoxiden (bzw. anderen Metallalkoxiden) und organisch modifizierten Silanverbindungen als flüssige Precursoren, die eine Durchmischung auf molekularer Ebene ermöglichen, erhält man durch kontrollierte Wachstums- und Präzipitationsprozesse (Hydrolyse- und Kondensationsreaktionen) Beschichtungslösungen als Sol, in denen die anorganischen und organischen Bestandteile durch kovalente Bindungen miteinander verknüpft sind und das sich im Vergleich zu üblichen Polymeren durch eine erhöhte Oberflächenhärte auszeichnet. In US 4,754,012 werden z. B. mehrkomponentige Sol-Gel-Schutzbeschichtungssysteme beschrieben, in denen organofunktionelle Alkoxysilane zusammen mit Metallalkoxiden zu einem kratzfesten Beschichtungsmaterial verarbeitet werden.

Mit den in situ Sol-Gel-Techniken lassen sich nur schwierig dickere hybride Schichten herstellen, da wegen der meist niedrigen Feststoffgehalte im Sol und der daraus resultierenden großen Schrumpfung leicht Rißbildung auftritt. Werden jedoch nanoskalige Teilchen (z. B. käufliche SiO₂-Sole) über eine chemische Reaktion an der Oberfläche geeignet modifiziert, kann man photopolymerisierbare anorganisch-organische Beschichtungssysteme mit höherem Anteil der anorganischen Komponenten herstellen, in denen Matrixphase und dispergierter Füllstoff gut vernetzt sind.

Hybride Beschichtungen dieses Typs sind im Patent US 4,455,205 von Olson et al erstmals offenbart. Es wird ein durch Bestrahlung härtbares Beschichtungsmateriai beschrieben, das aus einem multifunktionellen Acrylatmonomer, einem acryloxyfunktionellen Silan und wässrig-kolloidalem SiO₂ in einem polaren Lösungsmittel dargestellt wurde und zu transparenten, abriebbeständigen Beschichtungen führen soll. Nach dem Zusammengeben der Komponenten wird das Lösungsmittel und das überschüssige Wasser in einem als "Strippen" bezeichneten Prozess im Vakuum unter leichtem Erhitzen abgezogen.

Auch in US 4,348,462, US 4486504 und in US 5,468,789 sind strahlenhärtbare Beschichtungszusammensetzungen beschrieben, die wässrig kolloidales SiO₂ zusammen mit einem Alkoxysilylacrylat und einem nicht-Silylacrylat enthalten und die kratzfeste Beschichtungen auf Thermoplasten liefern sollen.

Strahlenhärtbare abriebfeste Beschichtungsmaterialien, die aus dem Michael-Addukt eines Aminoalkoxysilans mit einem multifunktionellen Acrylatmonomer und kolloidalem SiO₂ bestehen, beschreibt erstmals Wright in US 5,260,350 und US 5,374,483. Die Lackherstellung erfolgt in einem polaren Lösungsmittel (Isopropanol) und das kolloidale SiO₂ wird in wässriger Dispersion hinzugefügt. Das Wasser der SiO₂-Suspension löst die zur Einbindung des Oxids in den Lack notwendigen Hydrolyse- und Kondensationsprozesse aus und nach der Solbildung wird Wasser zusammen mit dem Lösungsmittel im Vakuum unter Erwärmung "gestrippt". Es wird angenommen, dass das in den Lack eingebundene kolloidale SiO₂ für die Erhöhung der Kratzfestigkeit der Beschichtung nach der radikalischen Polymerisation der verbleibenden Acrylatgruppen verantwortlich ist. Dabei spielt es keine Rolle, ob die radikalische Polymerisation nach Zugabe eines Photoinitiators durch UV-Strahlung oder durch andere energiereiche Strahlung, z. B. durch Elektronenstrahlung ausgelöst wird.

Die Verwendung von wässrigen kolloiden Metalloxidsolen bei diesen Formulierungen hat eine Reihe von Nachteilen, die insbesondere aus der Empfindlichkeit der gebildeten Produkte gegenüber Änderungen des pH Wertes resultieren. So kommt es gemäß US 5,374,483 zur Gelbildung, wenn zur alkalischen Michael-Addukt/Acrylatlösung direkt das wässrig kolloidale SiO₂ zugegeben wird und nicht vorher durch die Zugabe von Säure die überschüssige Alkalität neutralisiert wird. Zudem gelieren alle diese Produkte bei Verlust des/der Lösungsmittel leicht. Die erheblichen Gefahren des Gelierens beim Strippen des Lösungsmittels und des überschüssigen Wassers werden nach EP 0687713 durch die Zugabe von Polyoxyalkylenen mit endständigem Acrylat, z. B. Diethylenglycoldiacrylat, vor dem "Strippen" gemildert.

Ein genereller Nachteil all dieser Beschichtungsmaterialien auf der Basis hydrolisierbarer organisch modifizierter Alkoxysilane und in Wasser dispergierten Oxidmaterialien ist insbesondere die Tatsache, dass die Wassermenge in der Mischung nicht durch die Stöchiometrie der Reaktion, sondern durch die Wassermenge in den kolloiden Metalloxidlösungen bestimmt wird. Um eine ausreichende Konzentration an Oxiden zu erreichen, wird Wasser stets in großem Überschuß dosiert. Da die Wassermenge das Ausmaß der Hydrolyseund Kondensationsprozesse bestimmt, läßt sich in der ungehärteten Mischung die Vernetzung der anorganischen Partikel schwer kontrollieren und es besteht die Gefahr, dass sich durch Nachreaktion die Materialeigenschaften (z. B. die Viskositäten) verändern und deshalb die Lagerstabilitäten begrenzt sind. Das erschwert auch die Reproduzierbarkeit der Produktionsprozesse. Das "Strippen" des überschüssigen Wassers im Vakuum bringt neben dem Nachteil eines zusätzlichen Verfahrensschrittes also auch noch erhebliche Gefahren bezüglich einer vorzeitigen Gelierung.

Läßt man dagegen den Wasserüberschuß in der Mischung, werden längere Trockenzeiten der Beschichtung bis zur Auslösung der Strahlenhärtung erforderlich, da bekanntlich Wasser negative Auswirkungen auf die Schichteigenschaften haben kann.

Verwendet man in organischen Lösungsmitteln, z. B. in 2-Propanol, dispergierte Oxidsole, bestehen diese Nachteile nicht. Aber auch hier muß natürlich das Lösungsmittel vor dem Strahlenhärtungsprozeß abdestilliert werden, was auch diesen Prozeß energie- und kostenintensiv macht und somit ein umwelbelastendes Potential aufweist.

Weitere Nachteile ergeben sich dadurch, dass die kolloiden Metalloxidsole selbst einen erheblichen Anteil des Kostenaufwandes für die Herstellung der nach dem gegenwärtigen Stand der Technik entsprechenden Beschichtungsformulierungen ausmachen.

Ein anderer Nachteil speziell für die Herstellung von anorganisch-organisch hybriden Beschichtungsmaterialien über Michael-Addukte multifunktioneller Acrylate mit Aminoalkoxysilanen nach dem Stand der Technik ist dadurch gegeben, dass für die Neutralisation der überschüssigen Basizität der Michael-Adduktmatrix vor der Zugabe der kolloiden Metalloxidsole Acrylsäure (oder andere organische oder anorganische Säuren, die nicht in die Polymermatrix via Strahlenhärtung eingebunden werden können) eingesetzt werden müssen und die Herstellung damit auch ein umweltbelastendes Potential aufweist.

In Anbetracht des Standes der Technik ist es die Aufgabe der vorliegenden Erfindung, ein einfach durchführbares Verfahren zur Herstellung von strahlenhärtbaren Beschichtungsformulierungen zur Verfügung zu stellen, mit dem Beschichtungen mit hoher Kratzfestigkeit, hoher Abriebsfestigkeit und hoher Haftfestigkeit vorteilhaft hergestellt werden können und das die geschilderten Nachteile des Standes der Technik bezüglich der Reproduzierbarkeit, der Kosten und der Umweltverträglichkeit beseitigt oder zumindest deutlich verringert. Daneben sollen die mit dem erfindungsgemäßen Verfahren hergestellten Beschichtungsformulierungen so ausgestaltet sein, daß der Anteil extrahierbarer Komponenten in der Beschichtung nach der Strahlenhärtung gering ist.

Die Aufgabe der Erfindung wird durch ein Verfahren gelöst, bei dem unter den Bedingungen der Michael-Addition, vorzugsweise bei Raumtemperatur, mindestens ein multifunktionelles Acrylatmonomer oder -oligomer (Komponente I) mit einem Aminoalkoxysilan (Komponente II), das zwei oder drei hydrolisierbare Reste und ein oder zwei nicht hydrolisierbare Reste aufweist, zur Reaktion gebracht werden, das erhaltene Michael-Addukt mit dem Anhydrid einer ungesättigten Dicarbonsäure (Komponente III) unter Bildung des Halbamides oder Halbesters mit einer freien Carboxylgruppe umgesetzt wird, die Alkoxygruppen des Reaktionsproduktes mit einer stöchiometrischen Menge Wasser hydrolysiert werden und hochdisperse, nanoskalige Oxidmaterialien von Metallen oder Halbmetallen oder deren Mischoxiden oder Mischungen aus nanoskaligen und mikroskaligen Oxidmaterialien von Metallen oder Halbmetallen oder deren Mischoxiden (Komponente V) in Pulverform zugesetzt werden und nach Beendigung der Umsetzung gegebenenfalls ein Photoinitator zugesetzt wird.

In Ausführungsformen der Erfindung ist es auch möglich, nach der Reaktion des erhaltenen Michael-Addukts mit dem Carbonsäureanhydrid (Komponente III) mit weiteren, in der Michael-Addition reaktiven Monomeren [beispielsweise Hydroxyethylacrylat (HEA) oder Hydroxyethylmethacrylat (HEMA)] und/oder einer Alkoxyverbindung der allgemeinen Formel Me(OR)₄ oder RMe(OR)₃ (Komponente IV) umzusetzen. In den allgemeinen Formeln bedeutet Me Si, Al, Zr oder Ti. R bedeutet eine C₁-C₅-Alkylgruppe, die geradkettig oder gegebenenfalls auch verzweigt sein kann. Vorzugsweise bedeutet R Methyl oder Ethyl. Die Komponente IV dient als Vernetzungsagenz.

Durch die geeignete Einbindung von oxidischen Nanopartikeln, die weder in Wasser noch in organischen Lösungsmitteln kolloidal dispergiert sind, in strahlenhärtbare Polymermatrizen auf der Basis von Michael-Addukten können gut haftende, abrieb- und kratzfeste Beschichtungen hergestellt werden. Überraschenderweise wurde gefunden, dass die Einbindung der Oxidpartikel durch in situ Oberflächenmodifizierung über eigenkatalysierte Hydrolyse- und Kondensationsprozesse der Partikel mit einem Säureamidderivat, das aus dem Michael-Addukt eines Aminoalkoxysilans mit einem multifunktionellen Acrylat und einem Dicarbonsäureanhydrid in Anwesenheit einer für die Hydrolyse der Alkoxygruppen stöchiometrischen Menge Wasser erfolgt.

Erfindungsgemäß können technisch gut zugängige Metalloxide mit Teilchengrößen im nm-Bereich bis hin zum Mikrometerbereich durch Cohydrolyse und Cokondensationsprozesse in die beschriebenen photoreaktiven Beschichtungsformulierungen zur Erhöhung der Kratzfestigkeit bequem eingeführt und strahlenchemisch copolymerisiert werden und müssen nicht, wie im Sol-Gel-Verfahren üblich, erst während der Herstellung der Beschichtungslösung durch Hydrolyse der entsprechenden Ausgangsverbindung in situ gebildet oder nach Varianten des Sol-Gel Prozesses über wässrige oder alkoholische Metalloxidsole eingebracht werden.

Im Rahmen der Erfindung wurde überraschend gefunden, dass bei der Herstellung des hybriden Beschichtungsmaterials auf die nicht unproblematische Umsetzung mit kolloiden Oxid-Lösungen verzichtet und das die anorganische Netzwerkbildung kontrollierende Hydrolysewasser nach Maßgabe der Stöchiometrie in das System dosiert werden kann und deshalb kein Wasserüberschuß ausgestrippt werden oder durch lange Trockenzeiten bei erhöhten Temperaturen vor dem Härtungsprozeß ausgetrieben werden muß.

Die durch das einfache erfindungsgemäße Verfahren erhaltenen Formulierungen ergeben Beschichtungen, die hervorragende mechanische und physikalische Eigenschaften aufweisen und die außerordentlich kratzfest, abriebbeständig, haftfest sind. Die erfindungsgemäßen strahlenhärtbaren Beschichtungsformulierungen sind stabil und es können Substrate aus den unterschiedlichsten Materialien (z.B. Kunstoffe, Metalle) beschichtet werden.

Überraschenderweise wurde festgestellt, dass die Hydrolyse- und Kondensationsprozesse der erfindungsgemäßen Mischungen durch die inherente Carboxylsäurefunktion auch ohne Zugabe eines sauren Katalysators (HCl, Acrylsäure etc.) genügend schnell sind und auf die Zugabe eines speziellen sauren Katalysators verzichtet werden kann.

Die erfindungsgemäße Beschichtungsformulierung wird hergestellt aus:
I) einem oder mehreren multifunktionellen Acrylatmonomeren oder -oligomeren bzw. Methacrylatmonomeren oder -oligomeren.
   Beispiele für einsetzbare mehrfach funktionelle Acrylate und Methacrylate sind u. a. Triethylenglycoldiacrylat (TEGDA), Diethylenglycoldimethacrylat (DEGDMA), Trimethylolpropantrimethacrylat (TMPTMA) oder 1,6-Hexandioldiacrylat (HDDA). Erfindungsgemäß bevorzugte mehrfach funktionelle Acrylate sind Pentaerythritoltriacrylat (PETIA), Trimethylolpropantriacrylat (TMPTA), ethoxyliertes Pentaerythritoltetraacrylat (EB40) oder Dipentaerythritolpentaacrylat (DiPETIA), da Acrylate in der Michaeladdition bei Raumtemperatur reaktiver sind als Methacrylate.
II) einem Aminoalkoxysilan
   Bei diesen Alkoxysilanen handelt es sich um Siliciumverbindungen, die über 2 oder 3, vorzugsweise 3, hydrolysierbare Reste und einen oder 2, vorzugsweise einen, nicht hydrolysierbaren Rest verfügt. Beispiele für hydrolisierbare Reste sind Alkoxygruppen, insbesondere Methoxy und Ethoxygruppen. Der einzige bzw. mindestens einer der beiden nicht-hydrolisierbaren Reste verfügt über eine NH₂-Gruppe. Die erfindungsgemäß bevorzugt eingesetzten Aminoalkoxysilane der Komponente II sind in den Beispielen angeführt. Wegen der leichten Zugänglichkeit werden 3-Aminopropyltrimethoxysilan (AMMO) und 3-Aminopropyltriethoxysilan (AMEO) erfindungsgemäß besonders bevorzugt eingesetzt'.
III) dem Anhydrid einer ungesättigten Dicarbonsäure Geeignete Dicarbonsäureanhydride sind z.B. Maleinsäureanhydrid, Itactonsäureanhydrid oder Tetrahydrophthalsäureanhydrid. Maleinsäureanhydrid ist wegen der guten Verfügbarkeit und der niedrigen Kosten bevorzugt.
IV) gegebenenfalls Alkoxyverbindungen der allgemeinen Formel Me (OR)₄ oder R Me (OR)₃, wobei Me Si, Al, Zr oder Ti bedeutet und R eine C₁-C₅-Alkylgruppe ist
   Neben den Aminoalkoxysilanen der Komponente II können zur Herstellung der erfindungsgemäßen Zusammensetzungen zusätzliche hydrolisierbare Verbindungen von Elementen aus der Gruppe Si, Al, Zr, und Ti eingesetzt werden, vorzugsweise Alkoxysilane, besonders bevorzugt Tetraethoxysilan (TEOS). Sie dienen als Vernetzungsagenzien. Konkrete Beispiele für Verbindungen, die eingesetzt werden können, sind in den Beispielen angegeben, wobei diese jedoch keine Beschränkung der einsetzbären Verbindungen IV darstellen sollen.
V) hochdispersen nanoskaligen Metall- oder Halbmetalloxiden oder Mischungen aus nanoskaligen und mikroskaligen Metall- oder Halbmetalloxiden.

Dies können beispielsweise Oxide von Si und/oder Al oder von Übergangsmetallen, vorzugsweise Ti und Zr, sein. Die Teilchengrößen der nanoskaligen Oxide liegen im Bereich von 1-100 nm, vorzugsweise von 2-50 nm, der mikroskaligen Oxide im Bereich von 1 - 20 µm, vorzugsweise im Bereich von 5 - 15 µm. Diese Materialien werden in Form feinteiliger Pulver eingesetzt wie sie z.B. im Handel zugänglich sind. Bevorzugt sind Teichen aus Al₂O₃ und SiO₂, aber auch TiO₂-Pulver oder ZrO₂-Pulver oder Mischungen der genannten Oxide sind einsetzbar. Die mittlere Teilchengröße und die spezifische Oberfläche der handelsüblichen Oxidpartikel (z. B. Aerosile und Mattierungsmittel der Degussa AG, Frankfurt wie beispielsweise AEROSIL 200, AEROSIL TT600, AEROSIL OX50 oder Aluminiumoxid C, HK 125, OK 520) liegen im allgemeinen in dem für die erfindungsgemäßen Beschichtungen genannten Bereich. Da die Teilchen auch als Agglomerate vorliegen, sind dem Fachmann bekannte Methoden der mechanischen Deagglomeration wie z.B. Vermahlen, Rühren oder Ultraschallbehandlung angebracht, um Teilchen der genannten mittleren Teilchendurchmesser zu generieren. Diese hochdispersen Oxide weisen Oberflächen-Hydroxygruppen auf, über welche die Anbindung der organischen Komponenten der Mischung erfolgt. Das Oxidmaterial kann in Mengen bis zu 50 Gew.-% bezogen auf den Polymermatrix-Feststoffgehalt eingesetzt werden. Allgemein liegt der Gehalt im Bereich von 1-50%, vorzugsweise zwischen 5 und 40, besonders bevorzugt bei 10-30 Gew. -% bezogen auf den Feststoffgehalt der Polymermatrix aus den Komponenten I-III bzw. I-IV und den gegebenenfalls vorhandenen weiteren Acrylat -oder Vinyl-Komponenten.

In einer bevorzugten Ausführungsvariante der Erfindung werden Mischungen aus nanoskaligen und mikroskaligen Metall- oder Halbmetalloxiden oder Mischoxiden dieser eingesetzt. Bezogen auf die Gesamtmenge der Oxidmaterialien in der Beschichtungsformulierung beträgt der Anteil der mikroskaligen Oxide in der Mischung vorzugsweise bis zu 70 Gew.%. Besonders bevorzugt werden von 10 bis 55 Gew% mikroskalige Oxide in der Mischung mit nanoskaligen Oxiden eingesetzt. Ganz besonders bevorzugt kommen ca. 25 Gew.% mikroskalige und ca. 75 Gew.% nanoskalige Oxide zur Anwendung.

Die erfindungsgemäße Beschichtungsformulierung bietet viele Variationsmöglichkeiten sowohl in der Wahl der Reaktionspartner als auch in der Durchführung der Prozesse. Durch geeignete Auswahl und gegebenenfalls geeignete Kombination der Komponenten I - V bzw. auch durch die Zugabe weiterer reaktiver Monomerer nach der Michaeladdition, wie z.B. Hydroxyethylacrylat (HEA) oder Hydroxyethylmethacrylat (HEMA) oder auch von Vinylethern(vgl. Beispiele) ist sowohl eine weitgehende Modifizierung des organischen Netzwerkes als auch des anorganischen Netzwerkes möglich, wobei letzteres vor allem durch die bekannten Parameter wie pH-Wert, Wasserkonzentration, Temperatur etc. bestimmt wird. Die Viskosität der ungehärteten Lackformulierungen kann in weiten Grenzen eingestellt werden.

Das erfindungsgemäße Verfahren wird unter den für die Bildung von Michael-Addukten von Vinylverbindungen mit NH-Verbindungen geeigneten Bedingungen bei Raumtemperatur und unter starkem Rühren durchgeführt.

Eine Kühlung ist trotz der Exothermie unter diesen Bedingungen nicht erforderlich.
Um strahlenhärtbare Beschichtungsformulierungen zu erhalten, muß das Verhältnis von multifunktionellem Acrylat zu den in der Michaeladdition reaktiven Aminoalkoxysilanen so gewählt werden, das nach der Michael-Addition noch ausreichend polymerisationsaktive Doppelbindungen vorhanden sind. Die multifunktionellen Acrylatmonomere oder -oligomere (I) werden deshalb in einer Menge eingesetzt, die bezüglich dieser Alkoxysilane (II) größer als 2:1 ist, bevorzugterweise etwa 10:1 bis 20:1 ist.

Das Halbamid wird durch die Reaktion der sekundären Aminogruppen des Michael-Addukts mit dem Dicarbonsäureanhydrid gebildet. Es handelt sich um eine einfache Additionsreaktion, die über die Ringöffnung des Anhydrids erfolgt. Das Produkt trägt eine freie Carboxylgruppe, die die Benetzungscharakteristik für die nanoskaligen Partikel verbessern kann.

Das Anhydrid wird damit (wie das Aminoalkoxysilan) chemisch in die Acrylatmatrix eingebunden und, da es zudem copolymerisieren kann, besteht praktisch keine Gefahr, dass es aus der gehärteten Schicht extrahiert werden kann. Das resultierende Addukt enthält eine COOH-Funktionalität und kann damit als intermediärer Katalysator für die nach Zugabe von Wasser einsetzenden Hydrolyse- und Kondensationsprozesse dienen.

Das Dicarbonsäureanhydrid wird mit dem Michael-Addukt bei Temperaturen bis maximal 40°C umgesetzt, vorzugsweise bei Raumtemperatur.

Die Anbindung des erhaltenen organischen Zwischenprodukts an die Oxidpartikel erfolgt durch Cokondensation in der Weise, dass die Oxide unter starkem Rühren zur Reaktionslösung, die zuvor mit der für die Hydrolyse notwendigen Wassermenge und gegebenenfalls mit Alkoxyverbindungen der Komponente IV versetzt wurde, zugegeben werden. Dabei kommt es in der Regel zu einer Temperaturerhöhung auf ca. 50-60°C. Die Anbindung erfolgt in einer Stufe durch die Reaktion der hydrolytisch gebildeten Hydroxygruppen des Michael-Adduktderivats mit den Hydroxygruppen auf der Oberfläche der Partikel. Die Zugabe eines Katalysators, z. B. einer starken Säure, ist nicht erforderlich.

Die verbleibenden Alkoxygruppen des Michaeladdukts sowie von gegebenenfalls zugefügten Alkoxysilanen (Komponente IV) können ebenfalls mit Wasser zu Silanolgruppen hydrolisiert werden, reagieren aber nicht unbedingt mit OH-Gruppen der Partikeloberfläche, sondern können untereinander unter Bildung eines Netzwerks reagieren. Neben der chemischen Anbindung an die Partikeloberfläche können die Silanmoleküle auch physikalisch absorbiert sein. Durch die Kombination von chemisch gebundenen, physikalisch adsorbierten und untereinander vernetzten Aminoalkoxysilanmolekülen der Komponete II und Alkoxysilanen der Komponente IV kann es auch zur Ausbildung von Mehrfachschichten auf der Partikeloberfläche kommen.

Gegebenenfalls sollten Polymerisationsinhibitoren wie z. B. Butylhydroxytoluol (BHT) oder Phenothiazin (PTZ) als Inhibitoren der Autopolymerisation der Acrylate der Komponente I im erfindungsgemäßen Verfahren verwendet werden. Die Reaktionszeit für die Umsetzung der Komponenten I bis V liegt im Bereich von 15 Minuten bis zu 2 Stunden.

Die in der Reaktion des alkoxysilanfunktionalisierten erhaltenen Acrylatderivats mit Wasser (partiell) gebildeten Hydroxygruppen stehen zum Aufbau eines anorganischen Netzwerks (Si-O-Si Einheiten) mit den Oberflächen-Hydroxygruppen der oxidischen Partikel zur Verfügung, während die im multifunktionellen Acrylat verbleibenden Doppelbindungen unter Aufbau eines organischen Netzwerkes polymerisiert werden können.

Die erfindungsgemäß hergestellten Beschichtungsformulierungen werden auf die zu beschichtenden Oberflächen aufgetragen und polymerisiert. Gegenstand der Erfindung ist deshalb auch die Verwendung der erfindungsgemäß hergestellten, neuen Beschichtungsformulierungen zur Erzeugung von kratz-, abrieb- und haftfesten Beschichtungen.

Die Polymerisation kann in der üblichen, dem Fachmann bekannten Weise durch strahleninitiierte radikalische Polymerisation der ethylenisch ungesättigten Gruppen vorgenommen werden. Dem Fachmann sind die Möglichkeiten der Polymerisation durch kurzwellige Strahlung gut bekannt. Die Erzeugung der Beschichtung wird beispielsweise so vorgenommen, daß der erfindungsgemäßen Beschichtungsformulierung ein Photoinitiator zugesetzt wird, die Zusammensetzung auf die zu beschichtende Oberfläche aufgetragen und mittels UV-Strahlung gehärtet wird. Es ist auch möglich, die Härtung der erfindungsgemäßen Beschichtungsformulierung auf einer Oberfläche mittels Elektronenstrahl vorzunehmen.

Die Eigenschaften der erfindungsgemäßen Beschichtungen werden von der Art und dem Mengenanteil der oxidischen Nanopartikel in der Beschichtungsformulierung bestimmt. In einem weiten Konzentrationsbereich gilt, daß mit steigendem Anteil an diesen Komponenten auch die Kratzund Abriebsfestigkeit der erhaltenen Beschichtungen steigt.

Weitere Bestandteile der nach dem erfindungsgemäßen Verfahren hergestellten Beschichtungsformulierung können Photoinitiatoren und gegebenenfalls übliche Additive wie Pigmente, Verlaufsmittel, UV-Stabilisatoren u. a. sein. Die Auftragung auf das Substrat kann durch Standard-Beschichtungsverfahren, wie z. B. Tauchen, Streichen, Spritzen, Rakeln und Walzen erfolgen, wobei übliche Schichtdicken zwischen 2- 50µm, insbesondere 5- 25µm, bevorzugt sind.

Mit den erfindungsgemäßen Beschichtungsformulierungen können Substrate aus den unterschiedlichsten Materialien beschichtet werden, so z.B. Kunststoffe oder Metalle. Spezielle Beispiele für organische Polymere sind Polycarbonat, Polystyrol, Polyvinylchlorid, Polyethylen und Polyethylenterephthalat. Man erhält gut haftende Beschichtungen sogar auf solchen Kunststoffen, die erfahrungsgemäß schlecht mit kratzfesten Schutzbeschichtungen zu beschichten sind, wie Polystyrol oder Polycarbonat.

Die erhaltenen Beschichtungen besitzen je nach Vernetzungsdichte hervorragende mechanische und physikalische Eigenschaften.

Nach dem Härtungsprozess weisen die erfindungsgemäßen Beschichtungen Werte für die Abriebresistenz auf, die vergleichbar oder deutlich besser sind als die der Beschichtungen nach dem heutigen Stand der Technik.

Besonders abriebsresistente Beschichtungen (Reibradverfahren DIN 68 861 Teil 2) werden erhalten, wenn als Komponente V Mischungen von nano- und mikroskaligen Oxiden eingesetzt werden, wie oben beschrieben.

Auch bleiben die Eigenschaften des beschichteten Materials stabil erhalten, selbst wenn das Beschichtungsmaterial erst nach einer Lagerzeit von mehreren Wochen aufgetragen wird.

Erfindungsgemäß können also sehr brauchbare abriebbeständige und gut haftende Beschichtungen hergestellt werden. Die Viskositäten der hybriden Beschichtungsformulierungen sind trotz des hohen Anteils an oxidischen Komponenten so, dass für die Verarbeitung keine zusätzlichen organischen Verdünnungsmittel notwendig sind und gehärtete Beschichtungen der gewünschten optimalen Dicke hergestellt werden können.

Die strahlengehärteten Beschichtungen wurden durch folgende analytische Verfahren charakterisiert und mit Beschichtungen nach dem Stand der Technik verglichen.
Die Testverfahren sind hier kurz beschrieben:

### Bestimmung der Abriebsfestigkeit (DIN 52347 und ASTM D-1044)

Zur Bestimmung der Abriebsfestigkeit werden Taber Abrasion Tests an beschichteten Planscheiben mit Rollenmaterial CS 10F durchgeführt. Beim Reibradverfahren wird der durch in gegengesetzte Richtung drehende Reibräder auftretende Gleitverschleiß bei einer Beanspruchung von 100 Zyklen bzw. 500 Zyklen und einer Kraft von 5,4 N jedes Reibrades bestimmt. Als Meßgröße für den Verschleiß dient die prozentuale Zunahme der Streuung des transmittierten Lichts, die durch die Oberflächenveränderung während des Verschleißversuchs bedingt ist. Die diffuse Streuung beim Durchstrahlen der Abriebspur wird gemessen und der berechnete Mittelwert von 10 Streulichtmessungen als Maß für die Verkratzung der Probe angegeben. Die Abriebfestigkeit ist dabei definiert durch den Quotienten Schleier/ Transmission der Taberprobe minus den entsprechenden Quotienten der unbehandelten Beschichtung.

### Manueller Stahlwolletest(60 Zyklen)

Visuelle Beurteilung der Oberfläche nach 60 Kratzzyklen mit einem Stahlwolleball und Bewertung hinsichtlich von Kratzspuren.

Gute Kratzfestigkeit: keine Kratzspuren
Schlechte Kratzfestigkeit: Kratzspuren

### Beurteilung der Haftung zum Substrat:

Die Adhäsion der Beschichtung wird durch eine Gitterschnitt-Prüfung (DIN 53151) bestimmt.
Der Gitterschnitt-Test ist eine einfache empirische Prüfung zur Beurteilung des Haftens von Lacken auf ihrem Untergrund. Hierzu wird mit einem Mehrschneidegerät ein bis auf den Untergrund durchgehendes Schnittmuster mit sechs Schnitten gezogen, so dass ein Gitter mit 25 Quadraten entsteht.
Tape Test (ASTM D 3359) zur Überprüfung der Randhaftung wird entsprechend DIN 53151 durchgeführt. Vor der Beurteilung des Schnittmusters wird ein Streifen eines handelsüblichen Tesafilms auf die Schnittstelle angebracht und schnell unter dem Winkel von 90° abgezogen. Die anschließende Beurteilung erfolgt nach dem Prinzip: tt0 (keine Abplatzungen der Schicht) bis tt5 (vollständige Abplatzung der Schicht).

### Viskositätsbestimmung

Zur Bestimmung der dynamischen Viskosität der erfindungsgemäßen Beschichtungsmittel wurde ein Rotationsviskosimeter (Rheolab MC 295) verwendet. Die Probenmenge beträgt etwa 18 ml. Die Messung erfolgt in 3 Abschnitten. Im ersten Abschnitt wird die Drehzahl (Scherrate) D innerhalb von 60 s kontinuierlich von 0 auf 1000 1/s erhöht, anschließend wird die Drehzahl 15 s lang konstant auf D = 1000 1/s gehalten und im letzten Meßabschnitt innerhalb von 60 s von 1000 auf 0 1/s verringert.

Die Suspensionen mit den in situ modifizierten nanoskaligen Teilchen weisen erhebliche Abweichungen vom Newtonschen Fließverhalten auf. Die Viskosität dieser Suspensionen nimmt zunächst in einem sehr kleinen Bereich mit steigender Scherrate ab (thixotropes Fließverhalten) und steigt dann stark an. Das thixotrope Fließverhalten ist dabei ein Zeichen von Partikel/Partikel-Wechselwirkungen, die durch Energieeintrag bei Scherbelastung temporär aufgehoben werden, während die nachfolgende Periode dilatanten Verhaltens, d.h. ansteigender Viskosität mit steigender Scherbelastung, auf die Zunahme von Partikel/Partikel-Wechselwirkung durch Behinderung der sterischen Stabilisierung und Zunahme der Wechselwirkung über Wasserstoffbrückenbindung der verbleibenden freien OH-Gruppen hinweist.

### Beispiele:

Im folgenden wird die Erfindung anhand von Beispielen näher erläutert.

### Beispiel 1

In einem Rührgefäß werden 125 g ethoxyliertes Pentaerythritoltetraacrylat SR 494 (Cray Valley) bei Raumtemperatur mit 4,4 g 3-Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 0,5 g entionisiertes Wasser und danach 60 g nanoskaliges SiO₂ Aerosil OX 50 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 1, 4 Pas. Nach Hinzufügen von 2 Gew.-% des Photoinitiators 2-Hydroxy-2-methyl-1-phenyl-propan-1-on (Darocur 1173, Ciba Geigy), wurde die Lösung auf Polycarbonatplatten aufgetragen und mittels UV-gehärtet. Die gehärtete Beschichtung zeigte im Gitterschnitttest 100% Adhäsion, gute Kratzfestigkeit im manuellen Stahlwolletest (60 Zyklen) und gute Abriebsresistenz Taber₅₀₀= 2,3%; Taber₅₀₀= 7,5%.

### Beispiel 2

In einem Rührgefäß werden 125 g ethoxyliertes Pentaerythritoltetraacrylat SR 494 (Cray Valley) bei Raumtemperatur mit 3,7 g Aminopropyltriethoxysilan (AMMO) versetzt. Die erhaltene Lösung (- pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 0,5 g entionisiertes Wasser und danach 60 g nanoskaliges SiO₂ Aerosil TT600 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 3, 4 Pas. Die Lösung wird auf Polycarbonatplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 2,9%; Taber₅₀₀= 10,7%.

### Beispiel 3

In einem Rührgefäß werden 100 g ethoxyliertes Pentaerythritoltetraacrylat SR 494 (Cray Valley) bei Raumtemperatur mit 3,7 g 3-Aminopropyltrimethoxysilan (AMMO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 25 g Hydroxyethylmethacrylat (HEMA, UCB) sowie 0,5 g entionisiertes Wasser und danach 60 g nanoskaliges SiO₂ Aerosil MOX 80(Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 4,3 Pas . Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 2,2%; Taber₅₀₀= 9,7%.

### Beispiel 4

In einem Rührgefäß werden 100 g ethoxyliertes Pentaerythritoltetraacrylat SR 494 (Cray Valley) bei Raumtemperatur mit 4,4 g 3-Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 25 g Hydroxyethylacrylat (HEA, UCB) sowie 0,5 g entionisiertes Wasser und danach 60 g nanoskaliges SiO₂ Aerosil TT600 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 1,1 Pas . Nach Hinzufügen von 2 Gew.-% des Photoinitiators 2-Hydroxy-2-methyl-1-phenyl-propan-1-on (Darocur 1173, Ciba Geigy), wurde die Lösung auf Polycarbonatplatten aufgetragen und mittels UV-Strahlung gehärtet. Die gehärtete Beschichtung zeigte im Gitterschnitttest 100% Adhäsion, gute Kratzfestigkeit im manuellen Stahlwolletest (60 Zyklen) und gute Abriebsresistenz Taber₁₀₀= 2,5%; Taber₅₀₀= 9,5%.

### Beispiel 5

In einem Rührgefäß werden 70 g ethoxyliertes Pentaerythritoltetraacrylat SR 494 (Cray Valley) und 30 g Pentaerythritoltetraacrylat SR 295 (Cray Valley) bei Raumtemperatur mit 3,7 g 3-Aminopropyltrimethoxysilan (AMMO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 25 g Hydroxyethylacrylat (HEA, UCB), 5 g Tetraethoxysilan TEOS (Sivento) sowie 1,7 g entionisiertes Wasser und danach 60 g nanoskaliges SiO₂ Aerosil OX 50 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 0,7 Pas . Nach Hinzufügen von 2 Gew.-% des Photoinitiators 2-Hydroxy-2-methyl-1-phenyl-propan-1-on (Darocur 1173, Ciba Geigy), wurde die Lösung auf Polycarbonatplatten aufgetragen und mittels UV-Strahlung gehärtet. Die gehärtete Beschichtung zeigte im Gitterschnitttest 100% Adhäsion, gute Kratzfestigkeit im manuellen Stahlwolletest (60 Zyklen) und gute Abriebsresistenz Taber₁₀₀= 0,9%. Taber₅₀₀= 6,2%.

### Beispiel 6

In einem Rührgefäß werden 125 g ethoxyliertes Trimethylolpropantriacrylat TMPEOTA SR 454 (Cray Valley) bei Raumtemperatur mit 4,4 g 3-Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend wird 0,5 g entionisiertes Wasser und danach 60 g nanoskaliges SiO₂ Aerosil OX 50 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 0,52 Pas . Nach Hinzufügen von 2 Gew.-% des Photoinitiators 2-Hydroxy-2-methyl-1-phenyl-propan-1-on (Darocur 1173, Ciba Geigy), wurde die Lösung auf Polyvinylchloridplatten aufgetragen und mittels UV-gehärtet. Die gehärtete Beschichtung zeigte im Gitterschnitttest 100% Adhäsion, gute Kratzfestigkeit im manuellen Stahlwolletest (60 Zyklen) und gute Abriebsresistenz Taber₁₀₀= 2,5%; Taber₅₀₀= 9,0%.

### Beispiel 7

In einem Rührgefäß werden 60 g eines hexafunktionellen Urethanacrylates CN 975 (Cray Valley) und 65 g ethoxyliertes Pentaerythritoltetraacrylat SR 494 (Cray Valley) bei Raumtemperatur mit 4,3 g N-Aminoethyl-3-aminopropyl-trimethoxysilan (DAMO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 0,5 g entionisiertes Wasser und danach 60 g nanoskaliges SiO₂ Aerosil OX 50 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} *=* 7, 4 Pas . Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 1,2%; Taber₅₀₀= 7,7%.

### Beispiel 8

In einem Rührgefäß werden 70 g ethoxyliertes Pentaerythritoltetraacrylat SR 494 (Cray Valley) und 30 g Pentaerythritoltetraacrylat SR 295 (Cray Valley) bei Raumtemperatur mit 3,7 g 3-Aminopropyltrimethoxysilan (AMMO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 25 g Hydroxyethylacrylat (HEA, UCB), 5 g Tetraethoxysilan TEOS (Sivento) sowie 1,7 g entionisiertes Wasser und danach 60 g nanoskaliges Al₂O₃ C (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierimg hat eine dynamische Viskosität η_{25°C} = 0,9 Pas. Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 2,3%; Taber₅₀₀= 8,7.

### Beispiel 9

In einem Rührgefäß werden 110 g Pentaerythritolacrylat PETIA (UCB) bei Raumtemperatur mit 4,4 g 3-Aminopropyl triethoxysilan (AMEO) versetzt. Die erhaltene Lösung (∼pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 15 g N-Vinyl-pyrrolidon sowie 0,5 g entionisiertes Wasser und danach 60 g nanoskaliges Aerosil OX 50 (Degussa) portionsweise unter starkem Rühren zugesetzt, wobei sich die Viskosität der Mischung erhöht und die Reaktionstemperatur langsam auf 50-60°C ansteigt. Bei dieser Reaktionstemperatur wird weiter 15 Minuten intensiv gerührt. Die erhaltene Beschichtungsformulierung hat eine dynamische Viskosität η_{25°C} = 4,3 Pas. Die Lösung wird auf Polyvinylchloridplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 1,5%; Taber₅₀₀= 6,9%

### Beispiel 10

In einem Rührgefäß werden 110 g Pentaerythritolacrylat PETIA (UCB) bei Raumtemperatur mit 3,7 g 3-Aminopropyltriethoxysilan (AMMO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 15 g Trietylenglycoldivinylether (DVE-3, BASF) sowie 0,5 g entionisiertes Wasser und danach 60 g nanoskaliges Aerosil OX 50 (Degussa) portionsweise unter starkem Rühren zugesetzt. Die Mischung wird mit dem Ultraschallprozessor UP 200S (Hielscher GmbH) mit stufenlos einstellbarer Amplitude des Schwingsystems im Pulsbetrieb 30 Minuten in der Weise behandelt, dass unter Betriebsbedingungen die Reaktionstemperatur der Mischung langsam auf 50-60°C ansteigt. Die erhaltene Beschichtungsformulierung hat eine dynamische Viskosität η_{25°C} = 3,9 Pas. Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 0,9%; Taber₅₀₀= 4,5%.

### Beispiel 11

In einem Rührgefäß werden 75 g ethoxyliertes Trimethylolpropantriacrylat TMPEOTA SR 454 (Cray Valley) und 25 g ethoxyliertes Pentaerythritoltetraacrylat SR 494 (Cray Valley) bei Raumtemperatur mit 4,4 g Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 25 g Trietylenglycoldivinylether (DVE-3, BASF) sowie 0,5 g entionisiertes Wasser und danach 60 g nanoskaliges Aerosil OX 50 (Degussa) portionsweise unter starkem Rühren zugesetzt. Die Mischung wird mit dem Ultraschallprozessor UP 200S (Hielscher GmbH) mit stufenlos einstellbarer Amplitude des Schwingsystems im Pulsbetrieb 30 Minuten in der Weise behandelt, dass unter Betriebsbedingungen die Reaktionstemperatur der Mischung langsam auf 50-60°C ansteigt. Die erhaltene Beschichtungsformulierung hat eine dynamische Viskosität η_{25°C} = 0,28 Pas. Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyclen) und gute Abriebsresistenz Taber₁₀₀= 1,4%; Taber₅₀₀= 7,9%.

### Beispiel 12

In einem Rührgefäß werden 75 g eines hexafunktionellen aliphatischen Urethanacrylates (EB 1290, UCB) und 30 g PETIA (UCB) bei Raumtemperatur mit 4,4 g 3-Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt.

Anschließend werden 15 g Trietylenglycoldivinylether (DVE-3, BASF) und 5 g des Ethylpolysilikats Dynasil 40 sowie 1,5 g entionisiertes Wasser und danach 60 g nanosakliges Aerosil OX 50 (Degussa) portionsweise unter starkem Rühren zugesetzt. Die Mischung wird mit dem Ultraschallprozessor UP 200S (Hielscher GmbH) mit stufenlos einstellbarer Amplitude des Schwingsystems im Pulsbetrieb 30 Minuten in der Weise behandelt, dass unter Betriebsbedingungen die Reaktionstemperatur der Mischung langsam auf 50-60°C ansteigt. Die erhaltene Beschichtungsformulierung hat eine dynamische Viskosität η_{25°C} = 7,3 Pas . Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und gute Abriebsresistenz Taber₁₀₀= 0,7%; Taber₅₀₀= 4,1%

### Beispiel 13

In einem Rührgefäß werden 75 g eines hexafunktionellen aliphatischen Urethanacrylates (EB 1290, UCB) und 30 g PETIA (UCB) bei Raumtemperatur mit 4,4 g 3-Aminopropyltriethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend werden 20 g Trietylenglycoldivinylether (DVE-3, BASF) und 5 g des Ethylpolysilikats Dynasil 40 sowie 1,5 g entionisiertes Wasser und danach 40 g nanosakliges Aerosil OX 50 (Degussa) sowie 40 g Korund (Placor 13 der Firma ESK-SIC GmbH, Frechen) portionsweise unter starkem Rühren zugesetzt. Die Mischung wird mit dem Ultraschallprozessor UP 200S (Hielscher GmbH) mit stufenlos einstellbarer Amplitude des Schwingsystems im Pulsbetrieb 30 Minuten in der Weise behandelt, dass unter Betriebsbedingungen die Reaktionstemperatur der Mischung langsam auf 50-60°C ansteigt. Die erhaltene Beschichtungsformulierung hat eine dynamische Viskosität η_{25°C} = 3,3 Pas . Die Lösung wird auf Polypropylenplatten aufgetragen und mittels Elektronenstrahl gehärtet. Die gehärtete Beschichtung zeigt im Gitterschnitttest 100% Adhäsion, gute Kratzfestigkeit im manuellen Stahlwolletest (60 Zyklen) und sehr gute Abriebsresistenz nach dem Reibradverfahren DIN 68861 Teil 2 (Gewichtsverlust nach Behandlung der Schicht im Taber-Abraser mit CS-0, S 42, F 5,5 N nach 1000 Zyklen beträgt 4 mg).

### Beispiel 14

In einem Rührgefäß werden 125 g ethoxyliertes Pentaerythritoltetraacrylat SR 494 (Cray Valley) bei Raumtemperatur mit 4,4 g 3-Aminopropyl triethoxysilan (AMEO) versetzt. Die erhaltene Lösung (∼ pH 9) wird 15 Minuten bei Raumtemperatur kräftig gerührt und danach mit 0,5 g Maleinsäureanhydrid (MSA) umgesetzt, was zu einer Erniedrigung des pH Wertes auf etwa 5 führt. Anschließend wurden 0,5 g entionisiertes Wasser und unterschiedliche Mengen an nanoskaligem SiO₂ OX 50 (Degussa) portionsweise unter Rühren zugegeben, wobei sich die Viskosität erhöhte. Die Mischung wird mit dem Ultraschallprozessor UP 200S (Hielscher GmbH) mit stufenlos einstellbarer Amplitude des Schwingsystems im Pulsbetrieb 30 Minuten in der Weise behandelt, dass unter Betriebsbedingungen die Reaktionstemperatur der Mischung langsam auf 50-60°C ansteigt. Die erhaltenen Beschichtungsformulierungen werden auf Polyvinylchloridplatten aufgetragen und mittels Elektronenstrahl gehärtet. Die gehärtete Beschichtungen zeigt im Gitterschnitttest 100% Adhäsion.
Tab. 1 beschreibt den Einfluß des prozentualen Anteils an nanoskaligen Oxidteilchen auf die Werte für die Abriebsfestigkeit (DIN 52347) im Reibradverfahren mit dem Taber-Abraser.

| ***Gew. -% Oxid*** | ***T-100 [%]*** | ***T-[500]%*** |
|---|---|---|
| 5 | 15 | 32 |
| 10 | 12 | 19 |
| 15 | 9 | 16 |
| 20 | 5 | 12 |
| 25 | 3 | 8 |
| 30 | 2 | 8 |

Anhand der vorgestellten Beispiele kann man sehen, dass sehr brauchbare abriebbeständige und gut haftende Beschichtungen hergestellt werden können. Die Viskositäten der hybriden Beschichtungsformulierungen sind trotz des hohen Anteils an oxidischen Komponenten so, dass für die Verarbeitung keine zusätzlichen organischen Verdünnungsmittel notwendig werden und gehärtete Beschichtungen der gewünschten optimalen Dicke hergestellt werden können.

## Patentansprüche

1. Verfahren zur Herstellung von strahlenhärtbaren Beschichtungsformulierungen,
**dadurch gekennzeichnet, daß**
unter den Bedingungen der Michael-Addition mindestens ein multifunktionelles Acrylatmonomer oder -oligomer (Komponente I) mit einem Aminoalkoxysilan (Komponente II), das zwei oder drei hydrolysierbare Reste und ein oder zwei nicht hydrolysierbare Reste aufweist zur Reaktion gebracht werden, wobei das Verhältnis der Komponente I zur Komponente II mindestens 2:1 beträgt, das erhaltene Michael-Addukt mit dem Anhydrid einer ungesättigten Dicarbonsäure (Komponente III) bei Temperaturen bis maximal 40°C umgesetzt wird, die Alkoxygruppen des Reaktionsproduktes mit einer stöchiometrischen Menge Wasser hydrolysiert werden und nanoskalige Oxide oder Mischungen aus nanoskaligen und mikroskaligen Oxiden von Metallen oder Halbmetallen oder deren Mischoxiden (Komponente V) in Pulverform zugesetzt werden, wobei das Oxidmaterial in Mengen bis zu 50% des Polymermatrix-Feststoffgehaltes eingesetzt wird, und nach Beendigung der Umsetzung gegebenenfalls ein Photoinitiator zugesetzt wird.

2. Verfahren nach Anspruch 1,
**dadurch gekennzeichnet, daß**
nach der Umsetzung des Michael-Addukts mit dem Anhydrid einer ungesättigten Carbonsäure (Komponente III) mit weiteren, in der Michael-Addition reaktiven Monomeren und/oder einer Alkoxyverbindung der allgemeinen Formel Me(OR)₄ oder RMe(OR)₃ (Komponente IV) umgesetzt wird, wobei Me Si, Al, Zr oder Ti bedeutet und R eine C₁-C₅-Alkylgruppe ist.

3. Verfahren nach Anspruch 1,
**dadurch gekennzeichnet, daß**
als Komponente I Triethylenglycoldiacrylat (TEGDA), Diethylenglycoldimethacrylat (DEGDMA), Trimethylolpropantrimethacrylat (TMPTMA), 1,6-Hexandioldiacrylat, Pentaerythritoltriacrylat (PETIA), Trimethylolpropantriacrylat (TMPTA), ethoxyliertes Pentaerythritoltetraacrylat (EB40), Dipentaerythritolpentaacrylat (DiPETIA), Hydroxyethylacrylat (HEA) oder Hydroxyethylmethacrylat (HEMA) eingesetzt wird.

4. Verfahren nach Anspruch 1,
**dadurch gekennzeichnet, daß**
als Aminoalkoxysilan der Komponente II 3-Aminopropyl-trimethoxysilan (AMMO), 3-Aminopropyltriethoxysilan (AMEO) oder N-Aminoethyl-3-aminopropyl-trimethoxysilan (DAMO) eingesetzt wird.

5. Verfahren nach Anspruch 1,
**dadurch gekennzeichnet, daß**
als Anhydrid einer ungesättigten Dicarbonsäure (Komponente III) Maleinsäureanhydrid, Itactonsäureanhydrid oder Tetrahydrophthalsäureanhydrid eingesetzt wird.

6. Verfahren nach Anspruch 1,
**dadurch gekennzeichnet, daß**
als nanoskalige oder mikroskalige Oxide in Pulverform (Komponente V) SiO₂, Al₂O₃, ZrO₂, TiO₂ oder deren Mischungen eingesetzt werden, vorzugsweise Al₂O₃ oder SiO₂.

7. Verfahren nach Anspruch 2,
**dadurch gekennzeichnet, daß**
als weitere, in der Michael-Addition reaktive Monomere Hydroxyethylacrylat (HEA) , Hydroxyethylmethacrylat (HEMA), N-Vinyl-pyrrolidon oder Triethylenglycoldivinylether eingesetzt werden.

8. Verfahren nach Anspruch 2,
**dadurch gekennzeichnet, daß**
als Komponente IV ein Alkoxysilan, vorzugsweise Tetraethoxysilan (TEOS), eingesetzt wird.

9. Verfahren nach Anspruch 1,
**dadurch gekennzeichnet, daß**
Komponente I zur Komponente II im Verhältnis von 10:1 bis 20:1 eingesetzt wird.

10. Verfahren nach Anspruch 1 oder 2,
**dadurch gekennzeichnet, daß**
die nanoskaligen oder nanoskaligen und mikroskaligen Oxide in einer Menge von 5-40 Gew.%, bezogen auf den Feststoffgehalt der Polymermatrix, eingesetzt werden.

11. Verfahren nach Anspruch 1,
**dadurch gekennzeichnet, daß**
Mischungen aus nanoskaligen und mikroskaligen Oxiden eingesetzt werden, wobei der Anteil der mikroskaligen Oxide in der Mischung vorzugsweise bis zu 70 Gew.% beträgt, bezogen auf die Gesamtmenge der Oxidmaterialien in der Beschichtungsformulierung.

12. Verfahren nach einem der Ansprüche 1 bis 11,
**dadurch gekennzeichnet, daß**
Polymerisationsinhibitoren zur Inhibition der Autopolymerisation der Acrylate zugesetzt werden.

13. Verwendung einer nach den Ansprüchen 1 bis 11 hergestellten Beschichtungsformulierung zur Erzeugung von kratz-, abrieb- und haftfesten Beschichtungen auf Oberflächen, indem der Beschichtungsformulierung ein Photoinitiator zugesetzt wird, die Beschichtungsformulierung auf die zu beschichtende Oberfläche aufgetragen und mittels UV ausgehärtet wird.

14. Verwendung einer nach den Ansprüchen 1 bis 11 hergestellten Beschichtungsformulierung zur Erzeugung von kratz-, abrieb- und haftfesten Beschichtungen auf Oberflächen, indem die Beschichtungsformulierung auf die zu beschichtende Oberfläche aufgetragen und mittels Elektronenstrahl gehärtet wird.

## Claims

1. A method of producing radiation-curable coating formulations,
**characterized in that**
at least one multifunctional acrylate monomer or oligomer (component I) is reacted under the conditions of a Michael addition with an aminoalkoxysilane (component II) having two or three hydrolyzable residues and one or two non-hydrolyzable residues, the ratio of component I to component II being at least 2:1, the Michael adduct obtained is reacted with the anhydride of an unsaturated dicarboxylic acid (component III) at temperatures of 40°C at maximum, the alkoxy groups of the reaction product are hydrolyzed using a stoichiometric amount of water, and nanometer-sized oxides or mixtures of nanometer-sized and micrometer-sized oxides of metals or semimetals or mixed oxides thereof (component V) in powdered form are added, the oxide material being employed in amounts of up to 50% of the polymer matrix solids content, and a photoinitiator is optionally added after completion of the reaction.

2. The method according to claim 1,
**characterized in that**
subsequent to reacting the Michael adduct with the anhydride of an unsaturated carboxylic acid (component III), reaction with additional monomers reactive in a Michael addition and/or with an alkoxy compound of general formula Me(OR)₄ or RMe(OR)₃ (component IV) is effected, wherein Me represents Si, Al, Zr, or Ti, and R is a C₁-C₅ alkyl group.

3. The method according to claim 1,
**characterized in that**
triethylene glycol diacrylate (TEGDA), diethylene glycol dimethacrylate (DEGDMA), trimethylolpropane trimethacrylate (TMPTMA), 1,6-hexanediol diacrylate, pentaerythritol triacrylate (PETIA), trimethylolpropane triacrylate (TMPTA), ethoxylated pentaerythritol tetraacrylate (EB40), dipentaerythritol pentaacrylate (DiPETIA), hydroxyethyl acrylate (HEA), or hydroxyethyl methacrylate (HEMA) is used as component I.

4. The method according to claim 1,
**characterized in that**
3-aminopropyltrimethoxysilane (AMMO), 3-aminopropyltriethoxysilane (AMEO) or N-aminoethyl-3-aminopropyltrimethoxysilane (DAMO) is used as aminoalkoxysilane of component II.

5. The method according to claim 1,
**characterized in that**
maleic anhydride, itaconic anhydride or tetrahydrophthalic anhydride is used as anhydride of an unsaturated dicarboxylic acid (component III).

6. The method according to claim 1,
**characterized in that**
SiO₂, Al₂O₃, ZrO₂, TiO₂, or mixtures thereof, preferably Al₂O₃ or SiO₂, are used as nanometer-sized or micrometer-sized oxides in powdered form (component V).

7. The method according to claim 2,
**characterized in that**
hydroxyethyl acrylate (HEA), hydroxyethyl methacrylate (HEMA), N-vinylpyrrolidone, or triethylene glycol divinyl ether are used as additional monomers reactive in a Michael addition.

8. The method according to claim 2,
**characterized in that**
an alkoxysilane, preferably tetraethoxysilane (TEOS), is used as component IV.

9. The method according to claim 1,
**characterized in that**
component I and component II are employed at a ratio of from 10:1 to 20:1.

10. The method according to claim 1 or 2,
**characterized in that**
the nanometer-sized or nanometer-sized and micrometer-sized oxides are used in an amount of 5-40 wt.-%, relative to the solids content of the polymer matrix.

11. The method according to claim 1,
**characterized in that**
mixtures of nanometer-sized and micrometer-sized oxides are used, the percentage of micrometer-sized oxides in the mixture being preferably up to 70 wt.-%, relative to the total amount of oxide materials in the coating formulation.

12. The method according to any of claims 1 to 11,
**characterized in that**
polymerization inhibitors are added to inhibit autopolymerization of the acrylates.

13. Use of a coating formulation produced according to claims 1 to 11 in the production of scratch-resistant, abrasion-resistant and well-adhering coatings on surfaces, wherein said coating formulation is added with a photoinitiator, the coating formulation is applied onto the surface to be coated, and cured using UV.

14. Use of a coating formulation produced according to claims 1 to 11 in the production of scratch-resistant, abrasion-resistant and well-adhering coatings on surfaces, wherein said coating formulation is applied onto the surface to be coated, and cured using an electron beam.

## Revendications

1. Procédé de préparation de formulations de revêtement durcissables par irradiation,
**caractérisé en ce que**,
dans les conditions de la réaction d'addition de Michael, l'on fait réagir au moins un monomère ou un oligomère polyfonctionnel d'acrylate (composant I) avec un aminoalkoxysilane (composant II) qui comporte deux ou trois groupes hydrolysables et un ou deux groupes non hydrolysables, dans lequel le rapport du composant I au composant Il est au moins de 2 :1, l'adduit de Michael obtenu est mis en réaction avec l'anhydride d'un acide dicarboxylique insaturé (composant III) à des températures allant jusqu'à 40° C au maximum, les groupes alkoxy du produit de la réaction sont hydrolysés avec une quantité stoechiométrique d'eau et les oxydes de la taille du nanomètre ou les mélanges d'oxydes de taille nano- ou micrométrique de métaux ou de métalloïdes, ou leurs mélanges d'oxydes (composant V) sont ajoutés sous forme de poudre, la matière oxyde étant utilisée en des quantités allant jusqu'à 50 % de la teneur en matières solides de la matrice en polymère, et l'on ajoute éventuellement après la fin de la réaction un amorceur photochimique.

2. Procédé selon la revendication 1,
**caractérisé en ce**
**qu'**après la réaction de l'adduit de Michael avec l'anhydride d'un acide carboxylique insaturé (composant III), on conduit une réaction avec d'autres monomères réactifs dans l'addition de Michael et/ou un composé alkoxy de formule générale Me(OR)₄ ou RMe(OR)₃ (composant IV), dans lesquelles Me représente Si, Al, Zr ou Ti et R est un groupe alkyle en C₁-C₅.

3. Procédé selon la revendication 1,
**caractérisé en ce**
**qu'**en tant que composant I, l'on utilise du triéthylène glycol diacrylate (TEGDA), du diéthylène glycol diméthacrylate (DEGDMA), du triméthylolpropane triméthacrylate (TMPTMA), du 1,6-hexanediol diacrylate, du pentaérythritol triacrylate (PETIA), du triméthylolpropane triacrylate (TMPTA), du pentaérythritol tétraacrylate éthoxylé (EB40), du dipentaérythritol pentaacrylate (DiPETIA), de l'hydroxyéthylacrylate (HEA) ou de l'hydroxyéthylméthacrylate (HEMA).

4. Procédé selon la revendication 1,
**caractérisé en ce**
**qu'**en tant qu'aminoalkoxysilane du composant II, l'on utilise du 3-aminopropyltriméthoxysilane (AMMO), du 3-aminopropyltriéthoxysilane (AMEO) ou du 3-aminoéthyl-3-aminopropyl-triméthoxysilane (DAMO).

5. Procédé selon la revendication 1,
**caractérisé en ce**
**qu'**en tant qu'anhydride d'acide dicarboxylique insaturé (composant III), l'on utilise de l'anhydride d'acide maléique, de l'anhydride d'acide itaconique ou de l'anhydride d'acide tétrahydrophthalique.

6. Procédé selon la revendication 1,
**caractérisé en ce**
**qu'** en tant qu'oxydes de taille nanométrique ou micrométrique sous forme de poudre (composant V), l'on utilise du SiO₂, de l'Al₂O₃, du ZrO₂, du TiO₂ ou leurs mélanges, de préférence de l'Al₂O₃ ou SiO₂.

7. Procédé selon la revendication 2,
**caractérisé en ce**
**qu'**en tant qu'autres monomères réactifs dans l'addition de Michael, l'on utilise de l'hydroxyéthylacrylate (HEA), de l'hydroxyméthylméthacrylate (HEMA), du N-vinylpyrrolidone ou du triéthylène glycol divinyl éther.

8. Procédé selon la revendication 2,
**caractérisé en ce**
**qu'**en tant que composant IV, l'on utilise un alkoxysilane, de préférence du tétraéthoxysilane (TEOS).

9. Procédé selon la revendication 1,
**caractérisé en ce que**
l'on utilise le composant I et le composant II dans un rapport compris entre 10 : 1 et 20 :1.

10. Procédé selon la revendication 1 ou 2,
**caractérisé en ce que**
l'on utilise les oxydes de taille nanométrique ou de taille du nanomètre et du micromètre en une quantité de 5 à 40 % en poids rapporté à la teneur en matières solides de la matrice de polymère.

11. Procédé selon la revendication 1,
**caractérisé en ce que**
l'on utilise des mélanges d'oxydes de taille du nanomètre et du micromètre, dans lesquels la proportion des oxydes de la taille du micromètre est de préférence jusqu'à 70 % en poids rapporté à la quantité totale des oxydes dans la formulation de revêtement.

12. Procédé selon une des revendications de 1 à 11,
**caractérisé en ce**
**que** l'on ajoute des inhibiteurs de polymérisation pour inhiber l'autopolymérisation des acrylates.

13. Utilisation d'une formulation de revêtement préparée selon une des revendications de 1 à 11 pour fabriquer des revêtements résistants aux rayures, résistants à l'abrasion et adhérents sur les surfaces, consistant à ajouter un amorceur photochimique à la formulation de revêtement, à appliquer la formulation de revêtement sur la surface à enduire et à faire durcir le revêtement au moyen de rayons UV

14. Utilisation d'une formulation de revêtement préparée selon une des revendications de 1 à 11 pour fabriquer des revêtements résistants aux rayures, résistants à l'abrasion et adhérents sur les surfaces, consistant à appliquer la formulation de revêtement sur la surface à enduire et à faire durcir le revêtement au moyen d'un faisceau électronique.
